Europäisches Patentamt

**European Patent Office**

Office européen des brevets

(11) Numéro de publication: **0 251 866**
**B1**

(12) **FASCICULE DE BREVET EUROPEEN**

(45) Date de publication du fascicule du brevet:
24.01.90

(21) Numéro de dépôt: **87401390.7**

(22) Date de dépôt: **19.06.87**

(51) Int. Cl.⁴: **B60K 41/06**

(54) **Commande par contacteur en effort d'un système de débrayage à l'arrêt pour transmission automatique.**

(30) Priorité: **24.06.86 FR 8609073**

(43) Date de publication de la demande:
**07.01.88 Bulletin 88/1**

(45) Mention de la délivrance du brevet:
**24.01.90 Bulletin 90/4**

(84) Etats contractants désignés:
**BE DE ES GB IT NL SE**

(56) Documents cités:
**EP-A- 0 062 458**
**DE-B- 1 114 092**
**US-A- 3 776 048**

(73) Titulaire: **REGIE NATIONALE DES USINES RENAULT,**
**Boîte postale 103 8-10 avenue Emile Zola,**
**F-92109 Boulogne-Billancourt(FR)**

(72) Inventeur: **Leorat, François, 98, Boulevard de la Reine,**
**F-78000 Versailles(FR)**

(74) Mandataire: **Chassagnon, Jean Alain et al, 8/10, avenue**
**Emile Zola, F-92109 Boulogne-Billancourt(FR)**

## Description

La présente invention se rapporte à la commande électrique de la pression d'alimentation d'un récepteur hydraulique, notamment pour l'embrayage d'entrée sur le premier rapport d'une boîte de vitesses automatique pour véhicule automobile.

Pour la commande de ce type d'embrayage, on connaît des systèmes dits de débrayage à l'arrêt à commande électronique, tel celui décrit dans le brevet français n° 83-04636 EP-A 120 779, qui permettent de supprimer, sur un véhicule équipé d'une transmission automatique, la tendance spontanée à "ramper" à partir de l'arrêt, lorsque les circonstances de la conduite font considérer cette tendance comme indésirable.

La principale difficulté rencontrée dans la mise au point du tels systèmes se manifeste lors du redémarrage, lorsque le conducteur réappuie sur l'accélérateur et ouvre, de manière essentiellement variable, le papillon des gaz (moteur à cycle Beau de Rochas) ou de dispositif de dosage du gazole (moteur à cycle Diesel) ; en effet, il est très difficile de trouver des réglages donnant un résultat satisfaisant au point de vue confort du démarrage à la fois pour un démarrage avec un filet de gaz et pour un démarrage "pied à fond". Les défauts se traduisent par un à-coup à l'accélération inacceptable compte-tenu des standards de confort exigés des transmissions automatiques modernes.

Ces défauts s'expliquent par le fait que les systèmes de débrayage à l'arrêt connus à ce jour sont activés par la survenance simultanée de conditions préétablies notamment sur la vitesse du véhicule, la vitesse du moteur, la vitesse de sortie du convertisseur et la position de l'organe de dosage du combustible à l'alimentation du moteur : en particulier, pour cette dernière, on impose le plus souvent la condition

$\alpha c = \alpha c$ au ralenti ($\alpha c$ = charge moteur)

C'est précisément cette dernière condition qui est insuffisante pour assurer dans toutes les circonstances le confort recherché au redémarrage. En effet, cette seule condition sur $\alpha c$ ne prend pas en compte :

- l'intérêt et l'agrément qu'il y a à pouvoir faire des manoeuvres au ralenti, précisément en exploitant le phénomène de "ramper" propre aux transmissions automatiques ; en effet, pour faire cesser le débrayage à l'arrêt, il faut $\alpha c > \alpha c$ ralenti, ce qui revient à appuyer de manière sensible sur l'accélérateur ;
- l'inévitable temps de réponse au remplissage du vérin de l'embrayage d'entrée, qui bien que maintenu en position d'accostage, n'est pas à même de transmettre sans un certain délai, fût-il minime, le plein couple moteur lors d'un démarrage pied à fond ; par nature même, la mesure de $\alpha c$ ne permet aucune anticipation sur l'arrivée du couple, anticipation qui permettrait de pallier le temps de réponse de l'embrayage d'entrée.

La présente invention permet de remédier aux inconvénients précités des systèmes connus de "débrayage à l'arrêt" pour transmissions automatiques, en substituant à la mesure de $\alpha c$, un contacteur dit de "pied appuyé" inséré sur la commande d'accélérateur, qui a pour but de détecter si le conducteur appuie sur l'accélérateur sans pour autant ouvrir le papillon au-delà de la position $\alpha c$ ralenti ; cet interrupteur est caractérisé par une force d'actionnement telle que soit détectée une force d'appui du pied sur l'accélérateur qui soit significative, tout en restant notablement inférieure au niveau de force d'appui sur l'accélérateur à partir duquel commence à s'ouvrir l'organe de dosage du combustible au moteur ; le conducteur est ainsi à même de récupérer le "ramper" au ralenti sans pour autant dépasser le régime de ralenti en pouvant moduler son effort à la pédale d'accélérateur.

Selon un mode de réalisation préféré de l'invention, un contacteur coaxial au câble d'accélérateur fournit au boîtier électronique de commande de la transmission automatique un signal de mise à la masse lorsque le conducteur du véhicule cesse de solliciter la pédale d'accélérateur. La commande de ce contacteur est sensible à l'effort de traction sur le câble d'éccélérateur, de telle manière que le contact de masse s'ouvre pour un niveau d'effort sur la câble non nul mais inférieur au niveau nécessaire pour commencer à ouvrir le système de dosage du carburant au moteur à partir de la position de ralenti. Le signal de mise à la masse décrit ci-dessus complète les autres signaux qui concourent au fonctionnement d'un dispositif de débrayage à l'arrêt tel que celui décrit dans le brevet français n° 83-04636 (EP-A 0 120 779).

Selon un mode de réalisation de l'invention, le dispositif de commande par contacteur en effort, notamment pour un système de débrayage à l'arrêt d'une boîte de vitesses automatique, est monté sur la commande à câble du système de dosage du carburant du moteur, et qu'il comporte des contacts mobiles montés sur une pièce porte-contact solidaire de la gaine, lesdits contacts mobiles coopérant avec des contacts fixes montés sur des languettes conductrices disposées dans la partie haute du contacteur ; ladite pièce porte-contact étant ramenée en position par des moyens élastiques de rappel, qui prennent appui sur la partie basse du contacteur ; de manière que pour un effort non nul sur la pièce porte-contact, le circuit s'ouvre entre les contacts ; les moyens élastiques étant tirés de façon que l'effort de rappel qu'ils exercent, lorsque le l'ensemble mobile comportant la pièce porte-contact vient contre la butée de la partie basse du contacteur, est inférieur à l'effort nécessaire pour commencer à ouvrir le système de dosage du carburant du moteur à partir de sa position de ralenti.

Selon un mode de réalisation de l'invention, les moyens élastiques de rappel consistent en un ressort conique.

Selon un mode de réalisation de l'invention, la pièce porte-contact comporte deux plots semi-cylindriques diamétralement opposés, qui supportent une coupelle sur laquelle sont fixés les deux contacts mobiles de manière à permettre une certaine liberté de positionnement de ladite coupelle, qui ne peut s'échapper de la pièce porte-contact du fait d'une rondelle conique anti-retour montée contre un épaulement de ladite pièce porte-contact.

Selon un mode de réalisation de l'invention, la pièce porte-contact est solidarisée à l'extrémité de la gaine au moyen d'une rondelle de butée immobilisée par des pattes de sertissage sur ladite pièce porte-contact.

Selon un mode de réalisation de l'invention, le dispositif de commande par contacteur comporte un système d'étanchéité entre la pièce porte-contact et la gaine, entre la pièce porte-contact et les parties basse et haute du contacteur, et entre la gaine et la partie haute du contacteur.

Selon un mode de réalisation de l'invention, le système d'étanchéité entre la pièce porte-contact et la gaine consiste en un joint torique emprisonné entre la gaine, la pièce porte-contact et la rondelle de butée.

Selon un mode de réalisation de l'invention, le système d'étanchéité entre la pièce porte contact et les parties basse et haute du contacteur consiste en une membrane maintenue serrée sur la pièce porte-contact par un joint élastique ; ladite membrane étant maintenue prisonnière entre la partie basse et la partie haute du contacteur dans une gorge circulaire.

Selon un mode de réalisation de l'invention, le systeme d'étanchéité entre la gaine et la partie haute du contacteur est réalisé au moyen d'une chaussette souple, qui permet le mouvement relatif de la gaine par rapport au corps du contacteur.

selon un mode de réalisation de l'invention, les parties basse et haute du contacteur sont assemblées par des vis.

On va décrire maintenant un mode de réalisation non limitatif de l'invention en se référant aux dessins annexés parmis lesquels :

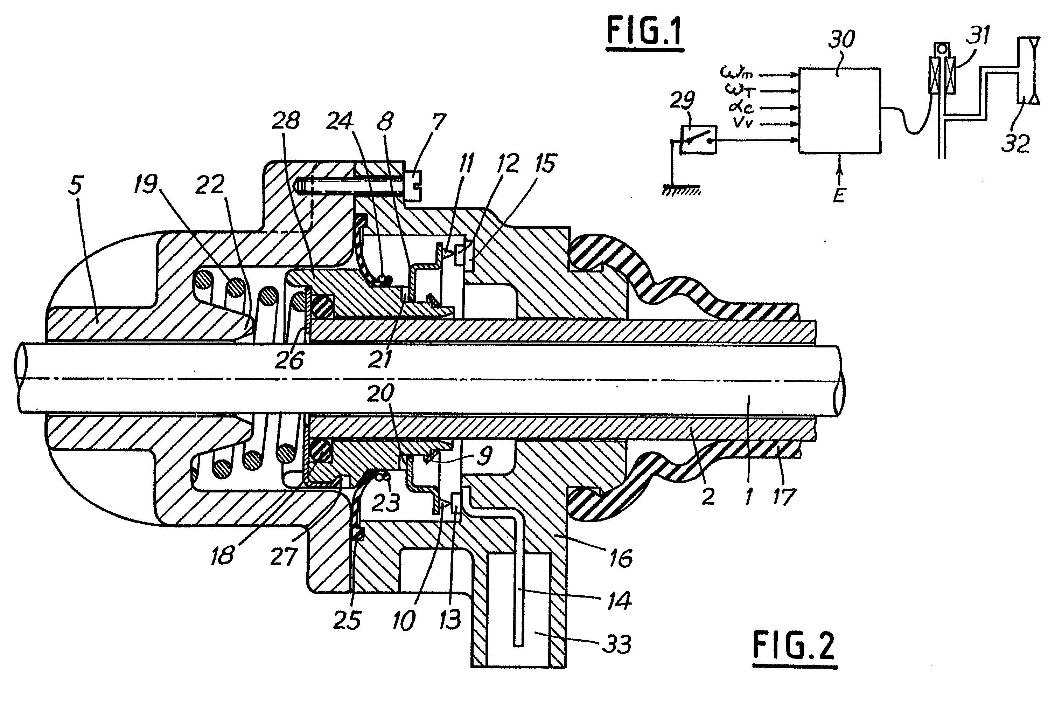

- la figure 1 représente le schéma du principe de l'invention dans un système de commande de débrayage à l'arrêt tel que celui décrit dans le brevet n° 83-04636 (EP-A 120 779);
- la figure 2 représente le contacteur objet de l'invention dans une vue en coupe selon un plan passant par l'axe du câble de commande d'accélérateur ;

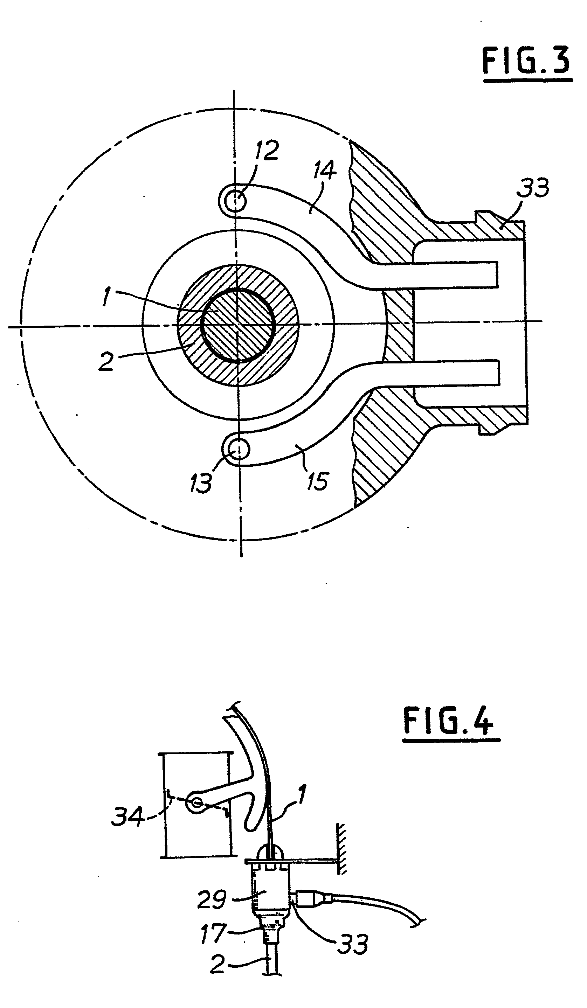

- la figure 3 est une vue de dessous de la partie côté origine du contacteur objet de l'invention ;
- la figure 4 représente un schéma d'installation du contacteur sur la commande d'accélérateur.

D'une manière non limitative, l'invention est décrite dans l'hypothèse d'une commande d'accélérateur à câble, mais l'invention s'adapterait à tout autre type de commande où l'effort sur la commande est accessible. Dans l'optique d'une commande à câble 1 coulissant dans sa gaine 2, l'effort sur la gaine est repris par une pièce mobile 28 porte-contact qui est solidarisée à l'extrémité de la gaine 2 au moyen d'une rondelle de butée 26 immobilisé sur la pièce porte-contact par des pattes de sertissage 27. L'étanchéité du contacteur vis-à-vis de remontées du fluide le long de la gaine 2 est assurée par un joint torique 18 imprisonné entre la rondelle de butée 26, la pièce porte-contact 28 et la gaine 2, dans une gorge ménagée dans la pièce porte-contact. L'effort sur la gaine 2 est transmis à la partie basse 5 du contacteur par un ressort conqiue 19 dont la partie extême prend appui sur la rondelle de butée 26 ; le débattement du ressort conique 19 est limité axialement par la butée 22 sur laquelle vient s'appuyer la pièce porte-contact 26. Les caractéristiques du ressort conique 19 sont telles que l'effort de rappel qu'il exerce sur l'ensemble de la pièce porte-contact 28 à la position où il arrive juste en butée est inférieur à l'effort nécessaire pour commencer à ouvrir l'organe doseur de carburant 34 à partir de sa position de ralenti.

La pièce porte-contact 28 supporte, par l'intermédiaire de deux plots semi-cylindriques diamétralement opposés 20 et 21, une coupelle métallique 8 sur laquelle sont fixés les deux contacts mobile 10 et 11 ; les plots semi-cylindrique 20 et 21 permettent une certaine liberté de positionnement à la coupelle 8, qui ne peut s'échapper de la pièce porte-contact 28 grâce à une rondelle conique anti-retour 9 montée contre un épaulement de la pièce porte-contact 28.

L'étanchéité du contacteur au niveau du porte-contact 28 est assurée sans frottement par une membrane 23 maintenue serrée sur la pièce porte-contact 28 par un joint élastique 24. Cette membrane 23 est maintenue prisonnière, entre la partie basse 5 et la partie haute 16 du contacteur, dans une gorge circulaire 25, ce qui assure l'étanchéité périphérique du contacteur. Les parties haute 16 et basse 5 sont assemblées, de manière non limitative, par des vis 7.

Lorsque le câble 1 est soumis à un effort faible des contacts mobiles 10 et 11 sont appliqués sur les contacts fixes 12 et 13, également diamétralement opposés ; le plan passant par l'axe du câble 1 et les autres contacts fixes 12 et 13 et orthogonal au plan passant par l'axe du câble 1 et par les génératrices supérieures de plots semi-cylindriques 20 et 21. Les contacts fixes 12 et 13 sont fixés sur des languettes conductrices 14 et 15 qui sont conformées de manière à constituer les deux fiches mâles d'un connecteur étanche 33 intégré ainsi à la partie haute 16 du contacteur. L'étanchéité du contacteur par rapport à la gaine 2 est réalisée au moyen d'une chaussette souple 17 qui permet le mouvement relatif de la gaine 2 et, de la partie haute 16 du corps du contacteur 29.

Lorsqu'un effort nul ou inférieur à la tare en place du ressort conique 13 est appliqué sur le câble 1 (ce qui correspond à la situation du pied non appuyé sur la pédale d'accélérateur), les contacts mobiles 10 et 11 sont appuyés sur les contacts fixes 12 et 13 ; le contacteur 29 fournit donc une information de signal de masse au boîtier électronique de commande 30, qui délivre, conformément à son programme, un signal d'activation de l'électrovanne 31 contrôlant le remplissage du vérin 32 (cf. Brevet n° 83-04636). LOrsque l'effort sur le câble 1 dépasse la tare en place du ressort conique 19, ce qui correspond à la situation du pied appuyé sur la pédale d'accélérateur, les contacts mobiles 10 et 11 se séprent des contacts fixes 13 et 12, et l'information de masse disparaît, ce qui provoque l'arrêt de l'électrovanne 31.

**Revendications**

1. Dispositif de commande par contacteur en effort, notamment pour un système de débrayage à l'arrêt d'une boîte de vitesses automatique, caractérisé en ce qu'il est monté sur la commande à câble (1) du système de dosage (34) du carburant du moteur, et qu'il comporte des contacts mobiles (10) et (11) montés sur une pièce porte-contact (28) solidaire de la gaine (2), lesdits contacts mobiles (10, 11) coopérant avec des contacts fixes (13) et (12) montés sur des languettes conductrices (15) et (14) disposées dans la partie haute (16) du contacteur (29); ladite pièce porte-contact (28) étant ramenée en position par des moyens élastiques de rappel, qui prennent appui sur la partie basse (5) du contacteur (29); de manière que pour un effort non nul sur la pièce porte-contact (28) le circuit s'ouvre entre les contacts (11) et (12) d'une part et (10) et (13) d'autre part ; les moyens élastiques étant tarés de façon que l'effort de rappel qu'ils exercent, lorsqu'l'ensemble mobile comportant la pièce porte-contact (28) vient contre la butée (22) de la partie basse (5) du contacteur (29), est inférieur à l'effort nécessaire pour commencer à ouvrir le système de dosage (34) du carburant du moteur à partir de sa position de ralenti.

2. Dispositif de commande par contacteur selon la revendication 1, caractérisé en ce que les moyens élastiques de rappel consistent en un ressort conique (19).

3. Dispositif de commande par contacteur selon la revendication 1, caractérisé en ce que la pièce porte-contact (28) comporte deux plots semi-cylindriques (20) et (21) diamétralement opposés, qui supportent une coupelle (8) sur laquelle sont fixés les deux contacts mobiles (10) et (11) ; de manière à permettre une certaine liberté de positionnement de ladite coupelle (8), qui ne peut s'échapper de la pièce porte-contact (28) du fait d'une rondelle conique anti-retour (9) montée contre un épaulement de ladite pièce porte-contact (28).

4. Dispositif de commande par contacteur selon la revendication 1, caractérisé en ce que la pièce porte-contact (28) est solidarisée à l'extrémité de la gaine (2) au moyen d'une rondelle de butée (26) immobilisée par des pattes de sertissage (27) sur ladite pièce porte-contact (28).

5.Dispositif de commande par contacteur selon la revendication 1, caractérisé en ce qu'il comporte un système d'étanchéité entre la pièce porte-contact (28) et la gaine (2), entre la pièce porte-contact (28) et les parties basse (5) et haute (16) du contacteur, et entre la gaine (2) et la partie haute (16) du contacteur.

6. Dispositif de commande par contacteur selon les revendications 4 et 5, caractérisé en ce que le système d'étanchéité entre la pièce porte-contact (28) et la gaine (2) consiste en un joint torique (18) emprisonné entre la gaine (2), la pièce porte-contact (28) et la rondelle de butée (26).

7. Dispositif de commande par contacteur selon la revendication 5, caractérisé en ce que le système d'étanchéité entre la pièce porte-contact (28) et les parties basse (5) et haute (16) du contacteur consiste en une membrane (23) maintenue serrée sur la pièce porte-contact (28) par un joint élastique (24), ladite membrane (24) étant maintenue prosonnière entre la partie basse (5) et la partie haute (16) du contacteur dans une gorge circulaire (25).

8. Dispositif de commande par contacteur selon la revendication 5, caractérisé en ce que le système d'étanchéité entre la gaine (2) et la partie haute (16) du contacteur est réalisé au moyen d'une chaussette souple (17), qui permet le mouvement relatif de la gaine (2) par rapport au corps du contacteur.

9. Dispositif de commande par contacteur selon la revendication 1, caractérisé en ce que les parties basse (5) et haute (16) du contacteur sont assemblées par des vis (7).

**Patentansprüche**

1. Kraft-Schalter-Steuervorrichtung, insbesondere für ein Stillstandsauskuppelsystem eines automatischen Getriebes, dadurch gekennzeichnet, daß sie auf einem Steuerkabel 1 des Dosiersystems 34 für den Motorkraftstoff angeordnet ist und daß sie bewegliche Kontakte 10 und 11 aufweist, die auf einem Kontaktträger 28 befestigt sind, der fest mit einer Buchse 2 verbunden ist, wobei die beweglichen Kontakte 10, 11 mit feststehenden Kontakten 13, 12 zusammenwirken, die auf leitenden Zungen 15, 14 angeordnet sind, welche im oberen Abschnitt 16 des Schalters 29 vorgesehen sind; der Kontaktträger 28 wird durch eine elastische Rückholanordnung 19 in Stellung gebracht, die sich auf dem unteren Abschnitt 15 des Schalters 29 derart abstützt, daß für eine Kraft ≠ 0 auf den Kontaktträger 28 sich der Kreis öffnet zwischen den Kontakten 11 und 12 einerseits und 10 und 13 andererseits; die elastische Anordnung ist derart justiert, daß die von ihr ausgeübte Rückholkraft, sofern die bewegliche Anordnung mit dem Kontaktträger sich in Richtung des Anschlages 22 des unteren Abschnittes 5 des Schalters 29 bewegt, geringer ist als die Kraft, die erforderlich ist, um das Dosiersystem 34 für den Motorkraftstoff zu öffnen, ausgehend von seiner Leerlaufstellung.

2. Steuervorrichtung nach Anspruch 1, dadurch gekennzeichnet, daß die elastische Rückholanordnung aus einer konischen Feder 19 besteht.

3. Steuervorrichtung nach Anspruch 1, dadurch gekennzeichnet, daß der Kontaktträger 28 zwei halbzylindrische, sich diametral gegenüberliegende Klötze 20 und 21 aufweist, die eine Schüssel 8 tragen, auf der die beiden beweglichen Kontakte 10 und 11 befestigt sind, derart, daß ein gewisses Stellungsspiel der Schüssel 8 besteht, die sich nicht von dem Kontaktträger 28 entfernen kann, aufgrund einer konischen Stellscheibe 9, die sich auf einer Schulter des Kontaktträgers 28 abstützt.

4. Steuervorrichtung nach Anspruch 1, dadurch gekennzeichnet, daß der Kontaktträger 28 fest mit dem Ende der Buchse 2 mittels einer Anschlagscheibe 26 verbunden ist und mittels Klemmstücken 27 am Kontaktträger 28 befestigt ist.

5. Steuervorrichtung nach Anspruch 1, dadurch gekennzeichnet, daß sie eine Dichtanordnung zwischen dem Kontaktträger 28 und der Buchse 2 zwischen dem Kontaktträger 28 und dem unteren und dem oberen Abschnitten 5 bzw., 16 des Schalters und zwischen der Buchse 2 und dem oberen Abschnitt 16 des Schalters aufweist.

6. Steuervorrichtung nach den Ansprüchen 4 und 5, dadurch gekennzeichnet, daß die Dichtanordnung zwischen dem Kontaktträger 28 und der Buchse 2 aus einer Ringdichtung 18 besteht, die zwischen der Buchse 2, dem Kontaktträger 28 und der Anschlagscheibe 26 eingeklemmt ist.

7. Steuervorrichtung nach Anspruch 5, dadurch gekennzeichnet, daß die Dichtanordnung zwischen dem Kontaktträger 28 und dem unteren und oberen Abschnitt 5 bzw. 16 des Schalters aus einer Membran 23 besteht, die auf den Kontaktträger 28 mittels einer elastischen Dichtung 24 eingeklemmt ist, wobei die Membran 23 zwischen dem unteren Abschnitt 5 und dem oberen Abschnitt 16 des Schalters in einer ringförmigen Nut 25 eingeklemmt ist.

8. Steuervorrichtung nach Anspruch 5, dadurch gekennzeichnet, daß die Dichtanordnung zwischen der Buchse 2 und dem oberen Abschnitt 16 des Schalters aus einem weichen Balg 17 besteht, der eine Relativverschiebung der Buchse 2 bezüglich des Schalterkörpers ermöglicht.

9. Steuervorrichtung nach Anspruch 1, dadurch gekennzeichnet, daß der untere Abschnitt 5 und der obere Abschnitt 16 des Schalters durch Schrauben 7 miteinander verbunden sind.

## Claims

1. Apparatus for control by a contact-making means in respect of force, in particular for a system for declutching in the stopped condition of an automatic gearbox, characterised in that it is mounted on the cable control (1) of the system (34) for metering fuel for the engine, and that it comprises movable contacts (10 and 11) mounted on a contact-carrying member (28) which is fixed with respect to the sheath (2), said movable contacts (10, 11) co-operating with fixed contacts (13 and 12) mounted on conductive tongue portions (15 and 14) which are disposed in the upper part (16) of the contact-making means (29); said contact-carrying member (28) being returned to its position by resilient return means (19) which bear against the lower part (5) of the contact-making means (29); in such a way that for a force which is not zero on the contact-carrying member (28) the circuit opens between the contacts (11 and 12) on the one hand and the contacts (10 and 13) on the other hand; the resilient means being tared in such a way that the return force that they apply when the movable assembly comprising the contact-carrying member (28) comes to bear against the abutment (22) of the lower part (5) of the contact-carrying member (28) comes to bear against the abutment (22) of the lower part (5) of the contact-making means (29) is less than the force required to begin to open the system (34) for metering the fuel for the engine from its idle position.

2. A control apparatus with a contact-making means according to claim 1 characterised in that the resilient return means comprise a conical spring (19).

3. A control apparatus with a contact-making means according to claim 1 characterised in that the contact-carrying member (28) comprises two diametrally opposed semicylindrical studs (20 and 21) which support a cup (8) on which the two movable contacts (10 and 11) are fixed; so as to permit a certain freedom of positioning of said cup (8) which cannot escape from the contact-carrying member (28) by virtue of a non-return conical washer (9) mounted against a shoulder of said contact-carrying member (28).

4. A control apparatus with a contact-making means according to claim 1 characterised in that the contact-carrying member (28) is fixed to the end of the sheath (2) by means of a stop washer (26) which is immobilised by crimping lugs (27) on said contact-carrying member (28).

5. A control apparatus with a contact-making means according to claim 1 characterised in that it comprises a sealing system between the contact-carrying member (28) and the sheath (2), between the contact-carrying member (28) and the upper and lower parts (5 and 16) of the contact-making means, and between the sheath (2) and the upper part (16) of the contact-making means.

6. A control apparatus with a contact-making means according to claims 4 and 5 characterised in that the sealing system between the contact-carrying member (28) and the sheath (2) comprises a toric joint (18) which is trapped between the sheath (2), the contact-carrying member (28) and the stop washer (26).

7. A control apparatus with a contact-making means according to claim 5 characterised in that the sealing system between the contact-carrying member (28) and the lower and upper parts (5 and 16) of the contact-making means comprise a diaphragm (23) which is held clamped to the contact-making member (28) by an elastic joint (24), said diaphragm (24) being held trapped between the lower part (5) and the upper part (16) of the contact-making means in a circular groove (25).

8. A control apparatus with a contact-making means according to claim 5 characterised in that the sealing system between the sheath (2) and the upper part (16) of the contact-making means is provided by means of a flexible boot (17) which permits relative movement of the sheath (2) with respect to the body of the contact-making means.

9. A control apparatus with a contact-making means according to claim 1 characterised in that the upper and lower parts (5 and 16) of the contact-making means are assembled by screws (7).

FIG.1

FIG.2

EP 0 251 866 B1

EP 0 251 866 B1

FIG.3

FIG.4